# FASCICULE DE BREVET EUROPEEN

(11) **EP 4 168 665 B1**
(45) Date de publication et mention de la délivrance du brevet: **14.08.2024**
(21) Numéro de dépôt: 20740395.7
(22) Date de dépôt: 19.06.2020
(51) Int. Cl.: F03B 13/06

(54) **DISPOSITIF THERMOÉLECTRIQUE DE STOCKAGE OU CONVERSIONS ÉNERGÉTIQUES**
THERMOELEKTRISCHE VORRICHTUNG ZUR SPEICHERUNG ODER UMWANDLUNG VON ENERGIE
THERMOELECTRICAL ENERGY STORAGE CONVERTING HEAT AND POWER

(43) Date de publication de la demande: 26.04.2023
(73) Titulaire: LALANNE, Pascal, 35800 Dinard (FR)
(72) Inventeur: LALANNE, Pascal, 35800 Dinard (FR)
(86) Numéro de dépôt international: PCT/IB2020/055815
(87) Numéro de publication internationale: WO 2020/255086

(56) Documents cités:
- WO-A2-2010/128222
- CN-A- 105 927 390
- DE-A1- 102004 047 290
- DE-A1- 102011 018 679
- US-A1- 2016 025 111

## Description

DEFINITION. Dans l'usage du mot « Chaud » utilisé comme un substantif, il faut comprendre l'énergie correspondant à des besoins d'apports de chaleur pour des utilisateurs externes, ou correspondant à des apports de chaleur vers des réserves thermiques chaudes, de températures égales ou plus hautes que la température ambiante. Dans l'usage du mot « Froid » utilisé comme un substantif, il faut comprendre l'énergie correspondant à des besoins d'extraction de chaleur à céder par des utilisateurs externes, ou correspondant à des extractions de chaleur de la part de réserves thermiques froides, de températures égales ou plus basses que la température ambiante. Dans l'usage des mots « fluide propulseur » il faut comprendre un fluide qui a pour fonction d'exercer une pression mais également comprendre que ce fluide inclue une fonction d'échange de chaleur ; dans les articles traitant de thermodynamique, c'est l'expression « fluide de travail », souvent circulant mais ici non-circulant, qui est généralement utilisée pour définir ce que ce document nomme « fluide propulseur ». Dans l'usage des mots « stockage thermoélectrique », il faut comprendre un mode de stockage d'électricité basé sur la création d'une réserve thermique de matière chaude ou d'une réserve thermique de matière froide, ou souvent des deux types de réserves, et sur la conversion de cette énergie thermique en énergie mécanique et finalement en électricité. Dans le mot « turbinage » il faut comprendre l'action de convertir de l'énergie hydraulique en énergie mécanique ou en énergie électrique par une ou plusieurs machines hydrauliques motrices (à turbine, à piston, à rotor, à vis, etc). Dans l'usage du mot évaporateur, il faut ici comprendre un système d'échange thermique fournissant de la chaleur à partir d'une source de chaleur. Dans l'usage du mot condenseur, il faut comprendre ici un système d'échange thermique extrayant de la chaleur à destination d'un absorbeur/puit de chaleur. Il est précisé que certains équipements d'échange thermique peuvent remplir de manière successive les deux fonctions d'évaporateur et de condenseur. Dans l'abréviation RPP, il faut comprendre réservoir pressurisé principal ou, dans un contexte de pluralité, réservoirs pressurisés principaux.

### Domaine technique

Avec la production croissante d'énergies renouvelables intermittentes se pose dans la plupart des pays le problème de stockage de l'énergie ainsi que le problème de la conversion de l'électricité renouvelable en Froid et en Chaud ainsi que l'opportunité de la conversion inverse.

La présente invention concerne un dispositif hybride de stockage ou de conversion énergétiques pour stocker, produire ou déplacer de l'énergie thermique ou électrique.

### Technique antérieure

Outre les systèmes de stockage d'énergie hydroélectrique par gravité très répandus dans les zones de montagnes, ont été inventés dans les dernières décennies des systèmes de stockage hydropneumatiques d'énergie hydraulique par lesquels la gravité terrestre est remplacée par la pression d'un gaz propulseur. Ces dispositifs sont constitués par un réservoir étanche contenant un liquide hydraulique mis en pression par un gaz propulseur.

Les dispositifs précédemment connus sont ingénieux en ce qu'ils permettent d'utiliser les équipements bien éprouvés de l'industrie hydro-électrique tels que pompes, moteurs, turbines, générateurs, etc. tout en s'affranchissant des fortes dénivellations de centaines de mètres généralement nécessaires aux stockages d'énergie hydraulique par gravité (pumped hydro). L'ingéniosité des systèmes réside en ce que, dans le réservoir étanche, chaque bar de pression du gaz propulseur produit le même travail, au niveau de la pompe hydraulique et de la turbine hydraulique, qu'une dizaine de mètre de dénivellation (par exemple 75 bar de pression du gaz propulseur produit le même effet que 735 mètres de dénivellation, quand le liquide hydraulique est de l'eau).

De tels systèmes ont donc été présentés, parfois dans des configurations dans lesquelles le ou les réservoirs étanches se trouvent au-dessus du sol, parfois constitués par des tronçons de gazoducs résistant jusqu'à des pressions de 150 Bar, et aussi dans des configurations où ces réservoirs sont enterrés affleurant sous la surface du sol pour économiser de l'espace extérieur, et aussi présentés dans des configurations où ces réservoirs sont constitués de dômes de sel, d'anciennes mines, ou de cavernes souterraines, ou de réservoirs sous-marins. Ces cavernes sont soit naturelles soit artificielles et dans la seconde alternative pourraient avantageusement être placées sous des falaises, sous des collines ou même sous des constructions de forte masse.

De même, ont été présenté des configurations dans lesquelles le ou les bassins de réception du liquide hydraulique se trouvent au-dessus du sol, et aussi des configurations où ces bassins sont enterrés affleurant sous la surface du sol, et enfin présentés des configurations où ces bassins sont constitués de cavernes souterraines, naturelles ou artificielles, généralement mises à la pression atmosphérique. En outre, le bassin de réception du liquide hydraulique est parfois simplement constitué par une étendue naturelle d'eau telle qu'un étang, un lac, une rivière, une mer ou un océan. Le liquide hydraulique étant alors l'eau douce ou l'eau salée constituant cette étendue d'eau.

### Résumé de l'invention

L'invention concerne un nouveau système hybride de stockage ou de conversion énergétiques. Le dispositif objet de l'invention propose une solution de stockage thermoélectrique, incluant des éléments du pompage-turbinage hydroélectrique, incluant du stockage en réserves thermiques, incluant la conversion d'électricité en énergie thermique ainsi que la conversion d'énergie thermique en électricité.

### Problème technique

En stockage hydropneumatique pur, les limitations des systèmes ci-dessus sont de quatre natures concomitantes, liées aux caractéristiques thermodynamiques des gaz, répondant de manière proche à la formule bien connue P.V=n.R.T des gaz parfaits. La première limitation est l'échauffement du gaz pendant la compression, la seconde limitation le refroidissement du gaz pendant la détente, la troisième limitation est l'importante portion du réservoir, de préférence supérieure à 50%, qu'il convient de réserver pour le seul au gaz pressurisé, et la quatrième limitation est que l'énergie stockable est seulement égale, aux pertes de rendement près, à l'intégrale des P.dV liquide sur le volume de liquide, et non pas à P.V liquide.

Alternativement, outre de très nombreux systèmes purement pneumatiques de stockage par compression d'air gazeux (CAES et AACAES), ont été présenté quelques autres systèmes hydropneumatiques par lequel le liquide hydraulique est au contraire un moyen, à circuit principalement fermé, de convertir l'énergie potentielle d'un air comprimé en énergie mécanique. De l'air neuf y est nouvellement incorporé à chaque cycle pour être ensuite perdu. L'inconvénient majeur de tous ces systèmes réside dans les inévitables écarts de température lors des compressions et des détentes, lesquels écarts nuisent fortement au rendement du stockage énergétique.

Alternativement a été déposée en 2010 sous la publication WO 2010/128222 A2 un intéressant système hydropneumatique français intitulé « Procédé et équipements de stockage d'énergie mécanique par compression et détente quasi-isotherme d'un gaz ». Cette innovation propose de parer aux deux inconvénients de réchauffement et de refroidissement du gaz exposés ci-dessus par la mise en contact thermique du gaz de travail avec un milieu à forte inertie thermique, pouvant permettre une compression et une détente quasi-isotherme du gaz. Cette publication aborde également la possibilité que le gaz de travail soit condensable.

Cependant, en dépit de l'avantage espéré par différentes innovations, une contrainte nouvelle est en train d'apparaître, cette fois de nature économique. En 2020, le Capex d'investissement de tous les réservoirs pressurisés à 100-150 bar est d'au moins 500 Euros par kWh d'énergie potentielle mécanique de compression récupérable. Or le Capex d'investissement de la méthode de stockage de référence, les batteries Li-Ion, est descendu de 1 000 Euros par kWh d'énergie stockée en 2010 à moins de 300 Euros par kWh en 2020, avec une pente qui reste fortement orientée à la baisse du Capex.

### Solution technique

Contrairement à tous les stockages hydropneumatiques précédents qui emmagasinent une énergie potentielle mécanique sous des pressions élevées, le stockage thermoélectrique offre l'important avantage par lequel la capacité d'énergie stockée, mesurée en Joule ou en kWh, n'est pas proportionnelle au volume des coûteux réservoirs pressurisés. Ceci y compris dans les dispositifs dans lesquels, comme dans celui objet l'invention, la conversion aller et retour d'électricité en Froid et en Chaud à stocker s'effectue au moyen d'un fluide de travail dans des réservoirs pressurisés. L'approche consistant à abandonner l'utilisation des réservoirs pressurisés comme simple stockage d'énergie mécanique et à utiliser au contraire ces derniers pour convertir l'énergie mécanique en déplacement de chaleur puis stocker cette énergie thermique en un doublet de réserves thermiques froides et chaudes constituées de matières peu coûteuses telles que la glace d'eau salée et l'eau chaude s'avère donc plus prometteuse économiquement.

Au cours du XXIème siècle ont donc été récemment présentés de nombreux dispositifs de stockage thermoélectrique. La plupart de ces systèmes, basés sur des circuits continus à fluide de travail frigorigène, convertissent l'énergie mécanique en réserves thermiques et convertissent ensuite cette énergie thermique en énergie mécanique par le recours obligatoire à trois ou quatre machines à multiples mouvements rapides d'une turbine ou d'un piston, opérant en phase gazeuse ou supercritique pour au moins deux d'entre elles, un compresseur et une turbine. Ces machines sont couteuses, fragiles d'utilisation imposant pour cette raison surchauffages et surre-froidissements du fluide de travail, et de rendements médiocres (inférieurs à 60% pour chaque sens de conversion), alors que, en se dispensant de telles machines, une quasi-réversibilité et des rendements proches de 80% pour chaque sens de conversion sont attendus du dispositif objet de l'invention.

Se distinguant de l'invention, il existe au moins une conception de stockage thermoélectrique de Suisse et de Corée du Sud, publiée en 2012 sous le DOI 10.1016/j.energy.2012.09.057 et utilisant de sophistiqués petits cylindres et soupapes à « pistons liquides » animés de nombreux mouvements rapides et alternatifs. Cette conception, qui utilise un liquide hydraulique soumis à la pression d'un fluide de travail, apporte une solution technique en éliminant ainsi deux machines opérant en phase purement gazeuse ou supercritique. Ces petits cylindres à « pistons liquides » sont des éléments novateurs appartenant à un conventionnel circuit à cycle continu du fluide de travail frigorigène. La séquence constituée d'une expansion puis d'une contraction du fluide de travail s'y effectue de manière rapide et continue par un classique circuit de recirculation du fluide de travail frigorigène, de type pompe à chaleur en mode de production ou d'extraction de chaleur, et de type moteur thermique en mode de conversion mécanique de la chaleur, exploitant classiquement dans les deux modes d'importantes variations de pression en différentes zones du circuit. En outre, ce procédé impose d'effectuer des aspersions de gouttelettes d'un liquide tiers pour tenter de réchauffer/refroidir le fluide de travail pendant les compressions/ détentes inhérentes à toutes les conversions thermodynamiques basées sur des circuits fermés à fluide frigorigène, ce qui génère de nombreux problème de corrosion et de dissolution du fluide de travail dans le liquide tiers. Dans le dispositif objet de l'invention, cette séquence constituée d'une expansion puis d'une contraction du fluide de travail s'effectue au contraire de manière relativement lente et quantitativement bornée en masse (non-circulante et non-continue), par la variation de volume dédié aux fluides de travail, à pressions semblable en toutes zones, dans les réservoirs pressurisés qui contiennent ce fluide de travail. En outre, le recours à des aspersions de gouttelettes d'un liquide tiers n'est pas obligatoire car il est remplacé par l'usage de différents systèmes d'échanges thermiques, pouvant fonctionner de manière simultanée avec le déplacement du liquide hydraulique dans ces réservoirs. Le système de stockage thermoélectrique objet de l'invention est mécaniquement beaucoup plus simple et probablement plus proche des conditions de réversibilité thermodynamique, et donc d'un rendement élevé, que la solution technique à « pistons liquides » précédemment publiée.

Le dispositif objet de l'invention est constitué - par au moins une paire de réservoirs pressurisés principaux, d'abréviation RPP, dit RPP de Travail Thermodynamique pour l'un, et dit RPP de Transit Hydraulique pour l'autre, contenant hermétiquement chacun au moins un fluide propulseur non-perdu et partageant au moins un liquide hydraulique se déplaçant entre eux de manière opposée via au moins une communication liquide équipée d'au moins une machine de conversion hydroélectrique telle qu'un ensemble de pompage ou un ensemble de turbinage, - par un système d'échange de chaleur échangeant avec les fluides propulseurs comprenant au moins un évaporateur connecté à une ou plusieurs sources de chaleur et au moins un condenseur connecté à un ou plusieurs absorbeurs/puits de chaleur. Le dispositif présente en outre les caractérisations supplémentaires - que la séquence thermodynamique constituée d'une expansion puis d'une contraction de chacun des fluides propulseurs s'effectue de manière relativement lente, discontinue et quantitativement bornée en masse par la variation du volume qui les contient dans les larges RPP, et non pas à haute vitesse et de manière continue grâce à un classique circuit de recirculation de fluide de travail, - que les fluides propulseurs soit travaillent par changements d'états alternés d'au moins deux états parmi les trois états liquide, gazeux, supercritique, soit travaillent dans l'état exclusivement supercritique par larges variations alternées de leur masse volumique supercritique - et que la pression du fluide propulseur du RPP de Transit Hydraulique soit quasi-constante et proche de la valeur minimum rencontrée dans l'étendue des pressions du fluide propulseur du RPP de Travail Thermodynamique.

Il est précisé que les nombreux dispositifs de stockage d'énergie où un fluide de travail travaille exclusivement en phase gazeuse, ainsi que ceux moins nombreux où un fluide de travail travaille en états Liquide-Gazeux en circuit ouvert et se trouve perdu, tels que l'azote ou l'air comprimé liquéfiés, ont été proposés par le passé et se distinguent du champ de l'invention.

Les très nombreux dispositifs où un fluide de travail travaille sans être perdu dans les états Liquide-Gazeux, ou Liquide-Supercritique, ou Gazeux-Supercritique, ou Supercritique, en utilisant un circuit de recirculation continue du fluide de travail capable de régénérer les variations de masse volumique de ce fluide, constituent la famille bien connue des pompes à chaleur et des machines frigorifiques, ou la famille bien connue des nombreux moteurs thermique à circuit fermés de fluide frigorigène (par exemple à cycle organique de Rankine, à cycle transcritique, à cycle de Kalina, à cycle de Brayton, à cycle de Hirn, etc.), ainsi que la famille des dispositifs de stockages énergétiques plus complexes associant plusieurs composants des 2 familles précédentes. Tous ces dispositifs à circuit de recirculation du fluide de travail ont été proposés par le passé et se distinguent du champ de l'invention.

Il est précisé que le dispositif travaillera le plus souvent en un étage unique, mais que si des pressions plus élevées devaient être souhaitables, il est possible de chainer les éléments du dispositif sous la forme d'un dispositif global à plusieurs étages. Dans cette configurations multi-étage, en prévoyant plusieurs ensembles de pompage ou de turbinage, ainsi que des réservoirs pressurisés intermédiaires si les technologies de conversion hydroélectrique l'imposaient, on peut élever la pression du liquide hydraulique ainsi que la pression de travail du fluide propulseur, bien au-dessus de celles d'une configuration à un unique ensemble de pompage ou de turbinage.

Des apports et extractions alternés de chaleur, par exemple en direction des réserves thermiques chaudes ou froides, sont nécessaires aux contractions et aux expansions du fluide propulseur dans le volume des RPP. Des systèmes d'échange de chaleur dont un condenseur sont au contact du fluide propulseur du RPP de Travail Thermodynamique pour d'extraire de la chaleur du fluide pendant la période de pompage du liquide hydraulique et postérieurement à celle-ci. Des systèmes d'échange de chaleur dont un évaporateur sont également nécessaires pour apporter de la chaleur à ce fluide propulseur préalablement à et pendant la période de turbinage du liquide hydraulique. Ces systèmes d'échange de chaleur doivent évidemment être construits de manière suffisamment robuste pour résister aux hautes pressions auxquelles travaillent les fluides propulseurs. Par l'usage de pompes, de vannes ou d'autres activateurs spécifiques, ces systèmes d'échange de chaleur sont mis en service soit manuellement soit automatiquement en fonction des différentes périodes programmées d'opération. Les systèmes d'échange de chaleur seront soit placés à l'intérieur des réservoirs pressurisés soit déportés à l'extérieur de ces réservoirs. Ils peuvent être constitués par des échangeurs multi-fluides classiques, et/ou par des insertions de matériaux conducteurs tels que l'aluminium, le cuivre, le carbone, etc. et/ou par des caloducs, et/ou par tout autre moyen d'échange de chaleur.

Pour permettre au liquide hydraulique d'être emmagasiné à la pression basse du cycle thermodynamique et non pas expulsé vers l'atmosphère avec une perte importante d'énergie pendant l'évaporation basse pression nécessaire à la production de froid ainsi que pendant le refoulement de turbinage, le dispositif objet de l'invention inclue l'importante nouveauté du deuxième RPP, dit RPP de Transit Hydraulique. Ce RPP, globalement semblable au RPP de Travail Thermodynamique, reçoit lui aussi des systèmes d'échange de chaleur, dont un condenseur et un évaporateur, mais contrairement à ceux du RPP de Travail Thermodynamique, ce condenseur et cet évaporateur n'échangent de la chaleur qu'avec une réserve thermique froide, et non pas avec le doublet thermique composé d'une réserve thermique froide et d'une réserve thermique chaude. Il est précisé que la pression basse souhaitée correspondant généralement à la pression de vapeur saturante du fluide propulseur du RPP de Travail Thermodynamique dans la condition de basse température de production de Froid.

Dans le cas où existe une dénivellation entre les positions, enterrées ou en surface, du RPP de Transit Hydraulique et du RPP de Travail Thermodynamique, le premier se trouvant avantageusement à une altitude égale ou plus élevée, alors il convient, par exemple par l'usage de deux fluides propulseurs de pressions de vapeur saturantes différentes, de diminuer la pression auquel est soumise le RPP de Transit Hydraulique d'un montant égal à la pression générée par la colonne de liquide hydraulique en cette dénivellation. Dans le cas d'importantes dénivellations, la pression basse nécessaire au RPP de Transit Hydraulique peut se trouver proche de la pression atmosphérique et le RPP de Transit Hydraulique peut alors être simplifié, sans perte d'énergie, sous la forme d'un simple bassin de réception du liquide hydraulique. Dans cette topographie très particulière, sont omis du dispositif : le fluide propulseur, l'évaporateur et le condenseur du RPP de Transit Hydraulique, lui-même réduit à un bassin de réception atmosphérique.

Selon un mode autonome de fonctionnement propre au stockage thermoélectrique, la chaleur extraite ou apportée au fluide propulseur du RPP de Travail Thermodynamique au niveau des systèmes d'échange de chaleur résulte principalement d'un apport ou d'une extraction de chaleur envers les réserves thermiques chaudes ou froides intégrées au dispositif objet de l'invention.

Selon un mode different de fonctionnement, des sources thermiques chaudes ou des sources thermiques froides extérieures sont apportées au dispositif principal, par exemple sous forme d'énergie solaire thermique, ou de disposition de glace, d'eau ou d'air froids, ou de disposition de vapeur, d'eau ou d'air chauds, ou de géothermie naturelle ou artificielle, ou d'énergie fatale de procédés tiers, etc. et réalisent, au niveau des systèmes d'échange de chaleur, la majorité de l'échange avec la chaleur extraite et apportée au fluide propulseur du RPP de Travail Thermodynamique, ceci via un ou plusieurs fluides caloporteurs, ou via un échange thermique direct au contact du fluide propulseur, ou via une ou plusieurs boucles ouvertes d'eau ou d'air. En outre, cet échange peut mettre à profit des équipements annexes de réfrigération évacuant de la chaleur, ou un réchauffage par combustion de déchets ou de biomasse, ou la récupération de gaz de combustion industriels, ou la disposition de masses minérales ou de masses métalliques froides ou chaudes, ou la disposition d'effluents industriels ou d'effluents d'assainissement urbain ou la disposition de mers, lacs, rivières, ou aquifères souterrains d'origine naturelle ou artificielle, etc. Ces sources thermiques externes froides ou chaudes sont mises à profit, soit pour améliorer le rendement thermodynamique des opérations de stockage thermoélectrique, soit pour directement accroître le niveau d'énergie thermique des réserves thermiques froides et chaude intégrées au dispositif, soit pour permettre à l'invention de devenir directement productrice d'électricité. A noter que, si il y fait appel en tant que source, l'environnement ambiant peut constituer une source froide ou peut alternativement constituer une source chaude.

Un fonctionnement faisant usage de combinaisons des modes externes et du mode autonome d'échanges de chaleur exposés ci-dessus est également possible.

Il est également intéressant, concernant le liquide hydraulique du dispositif, de penser à récupérer l'exergie de la chaleur emmagasinée par ce dernier à cause des inévitables pertes énergétiques par friction, évaluées chacune à environ 10% du travail, lors du pompage et du turbinage. Quelle que soit sa température d'équilibre souhaitée, ce liquide hydraulique se réchauffera de quelques degrés Celsius en augmentant sa chaleur sensible intrinsèque à chaque pompage et turbinage et se refroidira en cédant une partie de sa chaleur sensible intrinsèque lorsqu'il apportera cette chaleur au fluide propulseur.

Le nombre, la surface d'échange et la puissance spécifique des systèmes d'échange de chaleur doivent être largement dimensionnés aux fins que l'extraction massive et l'apport massif de chaleur provoquent le ou les changements d'état thermodynamique des fluides propulseurs. Dans le cas où un fluide propulseur travaille exclusivement dans son état supercritique, une importante extraction et un important apport de chaleur sont également nécessaires.

On veillera à sélectionner en choix de fluides propulseurs, des corps chimiques, ou des mélanges de corps chimiques, dont la pression de vapeur saturante, aux températures maximales rencontrées dans les réservoirs pressurisés, n'est pas supérieure à la pression maximale autorisée par ces réservoirs.

Des exemples de fluides propulseurs peu coûteux pouvant satisfaire, en état multi-phasique ou supercritique, cette condition de fonctionnement sont le dioxyde de carbone (CO2), dont la pression de vapeur saturante à 30 degrés Celsius est d'environ 72 bar et l'éthane (C2H6), dont la pression de vapeur saturante à 30 degrés Celsius est d'environ 47 bar. Sont également intéressants des mélanges constitué d'un fluide propulseur principal et incluant de faibles pourcentages d'autres molécules chimiques, tels un mélange de dioxyde de carbone avec des hydrocarbures, avec des composés azotés ou avec des alcools.

Dans le cas d'utilisation du dioxyde de carbone comme fluide propulseur, il est prévu qu'un ou plusieurs réservoirs pressurisés secondaires peuvent assumer le rôle supplémentaire de séquestration-stockage de quantités excédentaires de dioxyde de carbone (CO2), qui sous forme gazeuse est un gaz à effet de serre. De plus comme le dispositif nécessite d'importants échanges d'énergie thermique à chaque séquence d'extension et de contraction du fluide propulseur, il peut s'avérer intéressant, pour combattre l'inertie thermique, de réchauffer ou de refroidir de manière anticipée, dans des réservoirs pressurisés secondaires, et par différents moyens internes et externes dont ceux évoqués plus hauts, des quantités excédentaires du fluide propulseur pour substituer physiquement tout ou partie de ces excédents avec des masses équivalentes du fluide propulseur régulier, à des moments optimum de la séquence.

Dans le mode Liquide-Gazeux, grâce à l'extraction et l'apport massifs de chaleur, le fluide propulseur se déplacera, sur la courbe de changement d'état du diagramme Enthalpie-Pression du fluide propulseur choisi, en équilibre Liquide-Gazeux en fonction du volume de liquide hydraulique cohabitant avec lui dans les réservoirs pressurisés et en fonction de la chaleur apportée ou extraite à ce fluide propulseur. Le fluide propulseur du RPP de Travail Thermodynamique, soumis à une importante extraction de chaleur pendant la période de stockage d'énergie par pompage du liquide hydraulique, subira une condensation en phase liquide, et occupera donc un volume final réduit. Cette liquéfaction du fluide propulseur présente l'important avantage de permettre d'utiliser la quasi-totalité du réservoir pressurisé pour le déplacement du liquide hydraulique. Cette liquéfaction du fluide propulseur présente le second important avantage que le fluide propulseur du RPP de Travail Thermodynamique étant soumis à un important apport de chaleur préalablement à et pendant la période de turbinage du liquide hydraulique, ce fluide propulseur repassera de l'état liquide à l'état gazeux à sa pression de vapeur saturante et expulsera le liquide hydraulique à une pression constante.

Comme exemple de fonctionnement incluant l'état supercritique, ce bénéfice d'une masse volumique fortement accrue, contraction proche de la masse volumique en phase liquide, se retrouve après un fort refroidissement. De même une expansion à pression constante et une extrême augmentation de volume sont possibles lors d'un important apport de chaleur. Au-dessus du point critique de température et de pression, le fluide supercritique se conduit à températures modérés comme proche d'un liquide et à hautes températures comme proche d'un gaz.

Dans la plupart des cas, les fluides propulseurs bénéficieront de l'adjonction d'un ou plusieurs réservoirs pressurisés secondaires dédiés et communiquant avec les RPP par une ou plusieurs conduites. L'insertion de vannes entre les réservoirs permet d'isoler les réservoirs pressurisés secondaires et optionnellement de contribuer à réguler la pression régnant dans ces réservoirs, contribuant ainsi à piloter les températures souhaitées de condensation-liquéfaction et de gazéification des fluides propulseurs (en états Liquide-Gazeux) ou contribuant ainsi à piloter les conditions physiques du fluide en état supercritique. En outre, dans un objectif d'homogénéisation du fluide propulseur par brassage, il est intéressant d'équiper plusieurs conduites ci-dessus d'éventuels mécanismes de convections forcées entre les réservoirs secondaires et les RPP. A propos de la détente volontaire du fluide propulseur pour créer du Froid de basse température, il est précisé qu'il existe des équipements optionnels à piston(s) ou à turbine(s) qui en récupèrent l'énergie mécanique. A noter que l'adjonction au dispositif d'au moins un réservoir secondaire est obligatoire si l'on désire faire travailler le dispositif avec plus d'un fluide propulseur de manière non-simultanée, le ou les réservoirs secondaires isolant hermétiquement le ou les fluides propulseurs non utilisés.

Une amélioration peut être apportées au dispositif en ce que, pour limiter les risques de dissolution du ou des fluides propulseurs dans le liquide hydraulique, dissolution préjudiciable au maintien de sa masse dans le dispositif et préjudiciable au bon fonctionnement des machines de conversion hydroélectrique de pompage ou de turbinage, peut également être prévue une séparation physique mobile entre le liquide hydraulique et le fluide propulseur. Cette séparation peut être par exemple obtenue par le confinement du liquide hydraulique, ou par le confinement du fluide propulseur, au moyen d'une bâche étanche flexible, par exemple sous la forme d'une vessie centrale à extension radiale ou d'une membrane installée dans un plan sécant du réservoir principal, ou par le double confinement du liquide hydraulique et du fluide propulseur au moyen de deux bâches flexibles différentes, ou par l'incorporation d'un liquide spécifique de séparation flottant à la surface du liquide hydraulique, ou d'un piston ou flotteur étanches. Il est également possible d'augmenter le PH du liquide hydraulique ou d'y dissoudre des additifs pour y réduire la dissolution du fluide propulseur. En outre, une séparation physique mobile doit également être prévue entre des fluides propulseurs si l'on envisage de faire travailler simultanément plusieurs fluides propulseurs dans un des RPP.

Un dispositif supplémentaire peut être apportée au dispositif principal, amélioration par laquelle des masses de fluides caloporteurs ou de liquide hydraulique, ayant échangé de la chaleur avec les systèmes d'échange de chaleur précités lors des périodes de stockage et de production d'énergie, sont immédiatement entreposés dans plusieurs volumes différenciés selon leur température plus froide ou plus chaude. Cette différentiation permet une meilleure efficacité d'échange lors des échanges successifs de ces fluides caloporteurs avec les systèmes d'échange de chaleur précités. Ceci permet également d'exploiter les disponibilités de températures variées pour optimiser les usages tels que la conversion d'énergie thermique en électricité, la réfrigération, la climatisation, le chauffage ou la production d'eau chaude d'utilisateurs tiers (quartiers urbains, serveurs IT, complexes hôteliers, hôpitaux, supermarchés, industries, etc.).

En outre, ces volumes différenciés, ainsi que les réserves thermiques froides ou chaudes incorporées à ce dispositif de stockage thermoélectrique, peuvent faire usage de différents matériaux à changement de phase (MCP) en phases Liquide-Solide (paraffines, acides gras, MCP inorganiques, MCP eutectiques, mélange aqueux aux états Liquide-Solide, glace, eau salée solidifiée, etc.) pour en accroître la densité énergétique de stockage par usage de chaleur latente de changement d'état.

En outre, en dehors du fonctionnement des évaporateurs et des condenseurs, il peut avantageusement être exploité un échange thermique mutuel et synchrone entre deux masses différentes de fluide propulseur appartenant au même cycle thermodynamique, l'une nécessitant un réchauffage et l'autre nécessitant un refroidissement. Cette situation diabatique se présente par exemple, en utilisation de pompe à chaleur, comme en utilisation de moteur thermique, à l'occasion des deux branches isochores ou quasi-isochores opposées des cycles thermodynamiques. Cette chaleur peut également être utilisée, de manière synchrone ou après stockage de courte durée, pour préchauffer préalablement les fluides propulseurs chaque fois que nécessaire, par exemple avant la période de pompage du liquide hydraulique dans le but d'obtenir une température plus élevée lors de la production de Chaud. De même, il est avantageux de stocker temporairement les fluides caloporteurs de basses températures issus des systèmes échanges de chaleur pour provoquer préalablement des refroidissements sélectifs du fluide propulseur. A noter que l'environnement ambiant ou des sources thermiques externes froides ou chaudes peuvent être utilisées aux mêmes fins de préchauffage ou de refroidissement préalables du fluide propulseur.

Une autre situation diabatique s'intéresse à une partie de la jonction coté droit entre les isobares de pression basse et de pression haute du cycle thermodynamique. Plutôt que d'y réaliser une compression ou une détente adiabatiques ou isentropiques, conventionnelle des cycles à compresseur ou turbine travaillant en phase gazeuse ou supercritique, le dispositif objet de l'invention jouit de la pleine liberté d'extraire ou d'apporter de la chaleur pendant le déroulement même de cette compression ou de cette détente. Par l'usage d'un optionnel échangeur thermique externe au RPP de Travail Thermodynamique, appuyé par un mécanisme auxiliaire de recirculation du fluide propulseur à travers ce RPP, il est possible d'extraire ou apporter de la chaleur au fluide propulseur alors même qu'il subit une contraction ou une extension. Il est par exemple possible, même dans des cycles transcritiques, de disposer de larges segments diabatiques correspondants à des compressions ou à des détentes se réalisant à des températures choisies par l'opérateur, par exemple à la température maximale autorisée par le dispositif.

Dans le cas de pluralités du dispositif (cluster) il peut être avantageux de faire communiquer entre eux par des conduites supplémentaires munies de vannes et éventuellement de pompes tout ou partie des éléments des dispositifs tels que les RPP, les réservoirs pressurisés secondaires, les systèmes d'échange de chaleur, les compartiments différenciés de fluides caloporteurs, les ensembles de pompage ou de turbinage, les bassins de réception, les réserves thermiques froides, les réserves thermiques chaudes, etc., ceci dans un objectif de flexibilité, de redondance et d'efficacité thermique.

Dans le cas de pluralités du dispositifs (cluster) il est possible de faire travailler ceux-ci de manières décalée dans le temps, tels qu'en opposition de phase, pour uniformiser la valeur de la puissance de charge ou de la puissance de restitution énergétiques, compensant ainsi partiellement, vis-à-vis des dispositifs unitaires, le caractère discontinu de chaque séquence d'expansion et de contraction du fluide propulseur. Lors de ces opérations plurielles de manière décalée dans le temps, il est avantageux de satisfaire les besoins d'apports et d'extractions de chaleur des dispositifs unitaires afin que les apports de l'un correspondent en partie aux extractions de l'autre.

Le dispositif objet de l'invention fonctionne alternativement par relativement longues périodes de pompage ou de turbinage, et non pas par un cycle de circulation continue de multiples compressions-détentes rapides d'une petite quantité d'un fluide frigorigène circulant rapidement dans une pompe à chaleur ou dans une machine motrice à circuit fermé. De plus le fluide propulseur du dispositif objet de l'innovation travaille de manière quantitativement bornée en masse et ne bénéficie pas de la recirculation offerte par les circuits continus. On constate cependant qu'aux différences de temps près, les chemins de ces deux solutions opposés peuvent remarquablement coïncider sur le diagramme Enthalpie-Pression du fluide frigorigène sélectionné choisi. Le ou les fluides propulseurs sont par ailleurs des fluides frigorigènes de plein droit. Par exemple le code commercial du dioxyde de carbone (CO2) utilisé comme fluide frigorigène est R744 et celui de l'éthane (C2H6) utilisé comme fluide frigorigène est R170. Dans les deux cas de fonctionnement de manière quantitativement bornée en masse et de fonctionnement en circuit de recirculation, il y a transformation d'énergie mécanique (ici transformation d'une partie de l'énergie de pompage) pour déplacer de la chaleur d'une source froide vers une source chaude. Dans les deux cas, le coefficient de performance (COP) du Froid ou du Chaud, obtenu relativement au travail mécanique spécifiquement consommé, est généralement supérieur à l'unité, pour atteindre 3 ou plus selon le niveau de l'écart des températures basses et hautes souhaitées. Il est probable que le dispositif objet de l'invention bénéficie d'un coefficient de performance bien supérieur aux pompes à chaleur et aux machines frigorifiques classiques du fait que les multiples mouvements rapides du compresseur en phase gazeuse ou supercritique de ces dernières, de rendement inférieur à 70%, est ici remplacé par le travail de machines hydrauliques complémenté par une expansion et une contraction volumétriques lentes quasi réversible. Des coefficients de performance proches de 8 sont espérés, en fonction des niveaux des températures basses et hautes souhaitées.

Un dispositif supplémentaire peut être apporté pour améliorer les transferts de chaleur, amélioration par laquelle la portion supérieure d'une partie des réservoirs pressurisés est munie de systèmes d'aspersion et de chute par gravité de gouttelettes des fluides propulseurs ou de gouttelettes du liquide hydraulique, présents au bas des réservoirs pressurisés ou entreposés dans d'autres réservoirs. D'autres techniques physiques d'amélioration des transferts de chaleur tels que plateaux, garnissages ou autres moyens connus en industrie de distillation sont également possibles

Une amélioration peut être apportées au dispositif principal pour éviter d'avoir à complètement dépressuriser les réservoirs pressurisés jusqu'à la pression atmosphérique lors d'inspections et d'interventions internes postérieures à la première mise en service, cette dépressurisation provoquant une inversion des élongations et une fatigue accrue des matériaux qui le constituent. Cette amélioration consiste, plutôt que de faire appel à une fermeture unique, à réaliser la fermeture du ou des réservoirs pressurisés au moyen d'un sas, enceinte munie de deux systèmes étanches de fermeture. Ainsi, on pourra laisser le ou les réservoirs sous une pression de quelques bars pendant les inspections ou les interventions internes au moyen de drones et de robots, ou même au moyen de personnes équipées de scaphandre autonome ou rigide. Ce sas se prêtera également à être utilisé comme caisson de décompression lente, si une longue intervention humaine le requérait.

### Avantages apportés

En contrepartie d'une moindre compacité de sa composante dédiée à la puissance de conversion énergétique, le dispositif offre au moins deux qualités spécifiques de simplicité et de quasi-reversibilité en comparaison des systèmes précédemment exposés.

Le dispositif utilise en outre des éléments sélectionnés de disciplines éprouvées que sont - le stockage d'énergie par pompage turbinage hydroélectrique des zones de montagnes, - les réservoirs étanches à haute pression, en particulier les gazoducs et les cavernes artificielles souterraines, - les principes de déplacement de chaleur par des fluides frigorigènes, - les principes des moteurs thermiques, - et le stockage thermique de Froid et de Chaud.

De plus, le dispositif objet de l'invention fait usage de fluides qui, à la différence de l'utilisation d'air ou d'azote cryogéniques, sont sélectionnés pour changer des états Liquide-Gazeux-Supercritique (ou pour réaliser de larges variations de masse volumique à l'état supercritique) aux températures proches des températures ambiantes, ou à des températures et pressions compatibles avec le domaine du pompage turbinage hydroélectrique.

Enfin, dans des situations par lesquelles l'on disposerait de sources froides ou de sources chaudes externes, ces dernières peuvent être mises à profit, soit pour améliorer le rendement énergétique du stockage énergétique souhaité, soit pour permettre à l'invention de devenir productrice nette d'énergie.

### Brève description des dessins

Les dessins annexés illustrent l'invention.
**Fig.1**

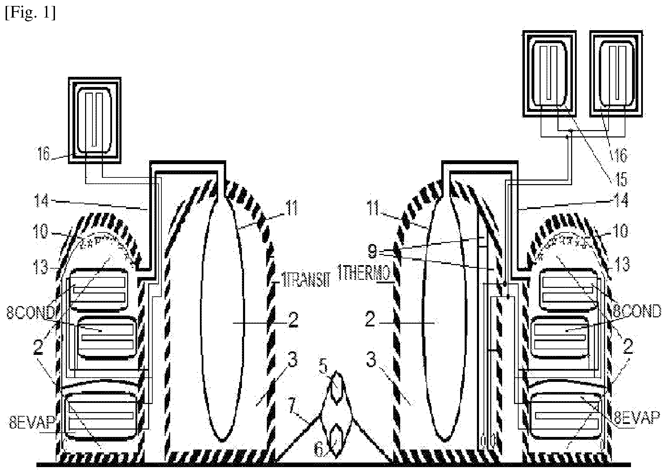

   [Fig.1] ] représente en coupe, le dispositif de l'invention dans une configuration où les réservoirs pressurisés sont placés au-dessus du sol.
**Fig.2**

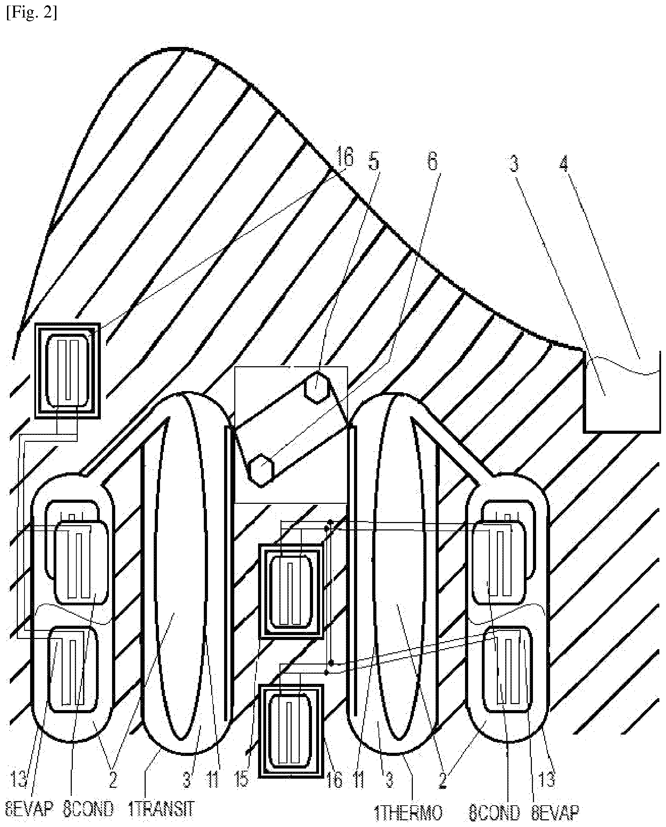

   [Fig.2] représente en coupe, une variante de ce dispositif dans une configuration où les réservoirs pressurisés sont constitués par des cavernes souterraines artificielles.
**Fig.3**

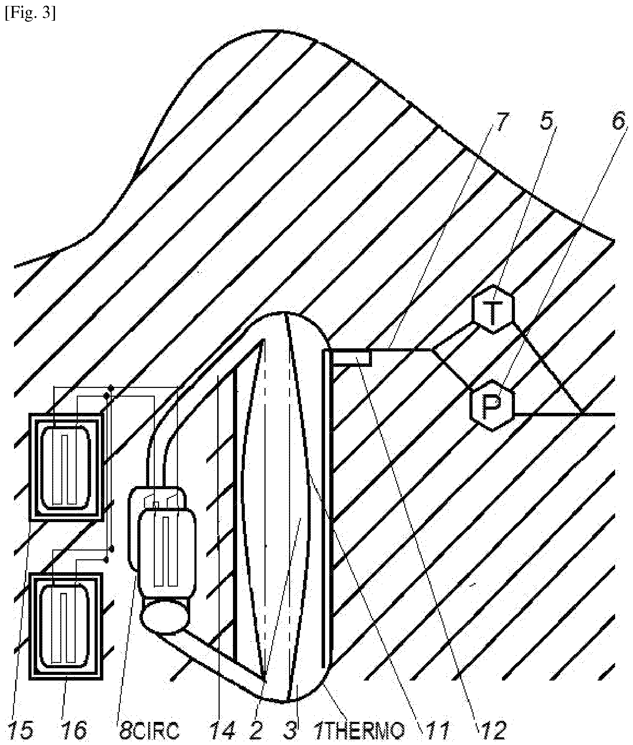

   [Fig.3] représente en coupe, le détail d'un RPP de Travail Thermodynamique équipé d'un système d'échange de chaleur externe incluant un mécanisme optionnel de recirculation du fluide propulseur à travers le RPP et ou le condenseur et l'évaporateur du RPP ne sont pas représentés.
**Fig.4**

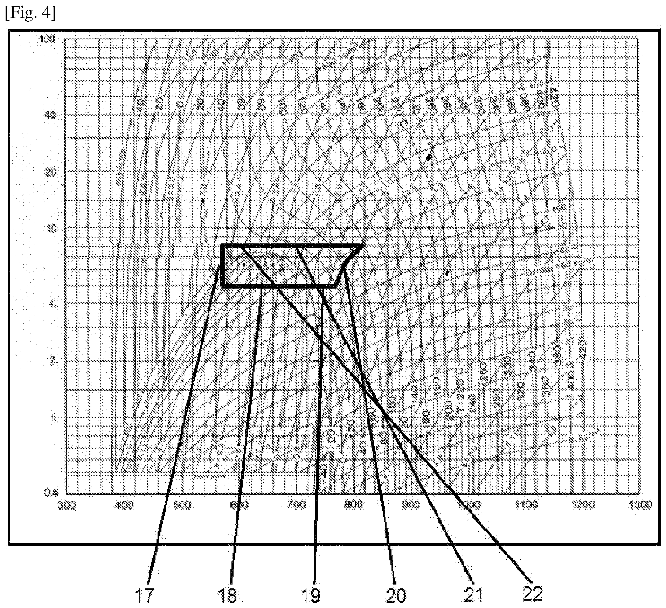

   [Fig.4] représente sur un diagramme Enthalpie-Pression une illustration d'un des modes de fonctionnements thermodynamiques possibles du dispositif, ici dans un mode à 3 états Liquide-Gazeux-Supercritique, et dans le cas particulier où le fluide propulseur est le dioxyde de carbone (CO2). L'axe horizontal des abscisses indique les variations d'enthalpie du corps dioxyde de carbone en kJ/kg et l'axe vertical des ordonnées indique la pression à laquelle ce fluide est soumis en MPa.
**Fig.5**

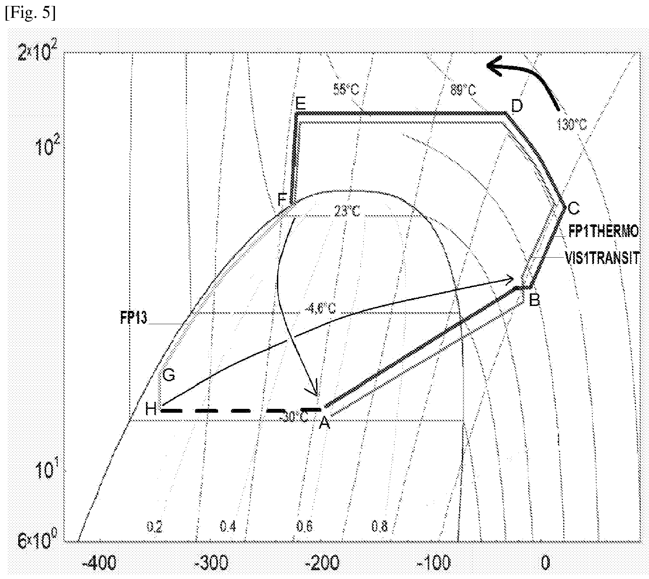

   [Fig.5] représente sur un diagramme Enthalpie-Pression une illustration d'un fonctionnement thermodynamique possible du dispositif dans une fonction de Pompe à Chaleur, ici dans le cas particulier où le fluide propulseur est le dioxyde de carbone (CO2). L'axe horizontal des abscisses indique les variations d'enthalpie du corps dioxyde de carbone en kJ/kg et l'axe vertical des ordonnées indique la pression à laquelle ce fluide est soumis en hecto kiloPascal.
**Fig.6**

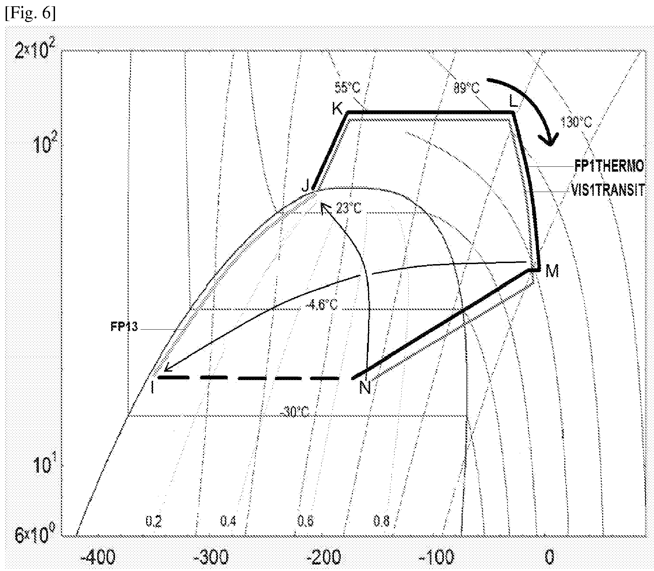

   [Fig.6] représente sur un diagramme Enthalpie-Pression une illustration d'un fonctionnement thermodynamique possible du dispositif dans une fonction de Moteur Thermique, ici dans le cas particulier où le fluide propulseur est le dioxyde de carbone (CO2). L'axe horizontal des abscisses indique les variations d'enthalpie du corps dioxyde de carbone en kJ/kg et l'axe vertical des ordonnées indique la pression à laquelle ce fluide est soumis en hecto kiloPascal.

### Description des modes de réalisation

En référence aux 3 premiers dessins Fig.1, Fig.2 et Fig.3, le dispositif comporte au moins un RPP de Travail Thermodynamique (1THERMO) et un RPP de Transit Hydraulique (1TRANSIT), contenant chacun au moins un liquide hydraulique (3), et au moins un fluide propulseur (2), comporte au moins une communication liquide (7) équipée par au moins une machine de conversion hydroélectrique (5) (6) et comporte au moins deux systèmes d'échange de chaleur (8COND) (8EVAP) en contact avec le fluide propulseur (2).

En référence à ces dessins, le dispositif peut également comporter, un bassin de réception (4) du liquide hydraulique (3) remplaçant le RPP de Transit Hydraulique dans l'éventualité d'une importantes dénivellation entre le bassin et le RPP de Travail Thermodynamique, des échangeurs externes de recirculation thermique (8CIRC) du fluide propulseur (2) à travers le RPP de Travail Thermodynamique (1THERMO), plusieurs compartiments différenciés (9) pour entreposer selon leur température plus froide et plus chaude le ou les éventuels fluides caloporteurs circulant au contact des systèmes d'échange de chaleur (8COND) (8EVAP) (8CIRC). Le dispositif inclus généralement des réserves thermiques chaudes (15) ou des réserves thermiques froides (16), notamment pour réaliser le stockage thermoélectrique, et concernant les réserves thermiques froides (16), pour réaliser le maintien en pression basse du RPP de Transit Hydraulique (1TRANSIT). Le dispositif peut inclure des réservoirs secondaires pressurisés (13) dédiés aux fluides propulseurs (2) nécessairement reliés aux RPP au moyen de conduites (14). Le dispositif peut également inclure, dans la portion supérieure des réservoirs (1THERMO) (1TRANSIT) (13) des systèmes d'aspersion et de chute par gravité de gouttelettes (10) du fluide propulseur (2) ou du liquide hydraulique (3). Le dispositif peut également inclure une ou plusieurs séparations physiques mobiles (11) entre le liquide hydraulique (3) et le ou les fluides propulseurs (2). La fermeture des réservoirs pressurisés (1THERMO) (1TRANSIT) (13) du dispositif peut être réalisée au moyen d'un sas (12).

En référence au premier dessin nommé Fig.4 utilisant le diagramme Enthalpie-Pression du corps dioxyde de carbone, on provoque dans cet exemple de fonctionnement conventionnel d'une fonction Pompe à Chaleur, consommant donc de l'énergie électrique, une forte détente (17) pour fixer la température du Froid que l'on souhaite récupérer, puis on réalise une gazéification à température et pression quasi constantes (18) pour produire le Froid à stocker. Par la suite comme on désire également récupérer ultérieurement du Chaud à haute température, on procède à un préchauffage préalable (19) du gaz sec par un apport de chaleur provenant de l'environnement ambiant, ou d'une source externe de chaleur, ou de la chaleur résiduelle des opérations précédentes (22). Dans une étape ultérieure, on provoquera une forte compression (20) du fluide propulseur (2) jusqu'à la pression qui va fixer la température maximale de température du Chaud souhaité, puis on réalisera en état supercritique une importante extraction de chaleur à pression quasi-constante qui provoquera une extrême contraction de volume (21) du fluide propulseur (2). A la fin de la contraction, l'extraction de chaleur ne récupère plus que de la chaleur de faible température (22), néanmoins intéressante à stocker temporairement pour réaliser le préchauffage (19) du fluide propulseur (2) de l'opération suivante. Il est remarquable de constater sur ce diagramme la possible superposition des périodes discontinue de travail du fluide propulseur (2) du dispositif avec la visualisions des étapes de recirculation des fluides de travail des pompes à chaleur et des machines frigorifiques conventionnelles. Un cycle thermodynamique tournant dans le sens inverse, serait celui de la fonction de Moteur Thermique, exploitant par exemple les réserves thermiques froides (16) et chaudes (15) pour restituer de l'électricité.

En référence au second dessin, nommé Fig.5, utilisant ici le diagramme Enthalpie-Pression du corps dioxyde de carbone, dans cet exemple de fonctionnement en sens inverse des aiguilles d'une montre correspondant à la fonction de Pompe à Chaleur pour stocker de l'énergie électrique sous forme thermique, le tracé FP13 reproduit les états du fluide propulseur (2) dans les réservoirs pressurisés secondaires (13), le tracé FP1THERMO reproduit les états du fluide propulseur (2) dans le RPP de Travail Thermodynamique (1THERMO) et le tracé VIS1TRANSIT permet de visualiser les transferts du fluide hydrauliques (3) entre les 2 RPP (1THERMO) (1TRANSIT), sans pour autant reproduire les états du fluide propulseur (2) dans le RPP de Transit Hydraulique (1TRANSIT), ces états étant quasi-constants, de température basse et de pression basse. A noter que dans la branche isochore maximum côté droit, il est opportun de réchauffer le fluide propulseur (2) froid et gazeux se trouvant dans le RPP de Transit Hydraulique (1TRANSIT), vide de liquide hydraulique (3) en conséquence du pompage hydraulique du cycle précèdent, à partir du souhaitable refroidissement du fluide propulseur (2) dense se trouvant, chaud en quasi-isochore, dans les réservoirs pressurisés secondaires (13) du RPP de Travail Thermodynamique (1THERMO). On utilise pour cela au cours du tronçon AB un échangeur thermique de réchauffage-refroidissement mutuel, additionnel et non illustré sur les figures, entre ces deux masses de fluide propulseur (2). Pour réussir cette opération thermique essentielle, on transvase intégralement via cet échangeur additionnel, grâce à un transvasement mécanique du liquide hydraulique (3) par une petite pompe et conduite hydraulique annexes, la totalité de la masse de fluide propulseur (2) gazeux et froid, entre le RPP de Transit Hydraulique (1TRANSIT) et le RPP de Travail Thermodynamique (1THERMO), originellement totalement rempli de liquide hydraulique (3) en conséquence du pompage hydraulique du cycle précèdent. Sans ce transvasement séquentiel, cet échange thermique mutuel serait impossible en conditions de quasi-réversibilités. Le tronçon BC illustre une compression isentropique partielle. Le tronçon CD illustre une intéressante et inhabituelle extraction de chaleur à température maximale pendant une compression diabatique. Le tronçon DE illustre une classique production de Chaud par une extraction de chaleur isobare en phase supercritique grâce à l'emploi du condenseur (8COND), situé en haute pression. Le tronçon EF illustre un refroidissement jusqu'à l'état dense (ou liquide) du fluide propulseur (2). Le tronçon FG illustre le refroidissement du fluide propulseur (2) dans les réservoirs pressurisés secondaires (13). Le tronçon GH illustre une classique détente isenthalpique pour descendre la température du fluide propulseur (2) à son minimum. Le tronçon HA illustre une gazéification isobare pour la production de Froid grâce à l'évaporateur (8EVAP), situé en basse pression. Il est important de noter que l'on effectue nécessairement une seconde permutation volontaire des deux RPP (1THERMO) (1TRANSIT) entre le point F et le point A.

En référence au troisième et dernier dessin, nommé Fig.6, utilisant ici le diagramme Enthalpie-Pression du corps dioxyde de carbone, dans cet exemple de fonctionnement dans le sens des aiguilles d'une montre correspondant à la fonction de Moteur Thermique restituant l'énergie électrique, le tracé FP13 reproduit les états du fluide propulseur (2) dans les réservoirs pressurisés secondaires (13), le tracé FP1THERMO reproduit les états du fluide propulseur (2) dans le RPP de Travail Thermodynamique et le tracé VIS1TRANSIT permet de visualiser les transferts du fluide hydrauliques (3) entre les 2 RPP (1THERMO) (1TRANSIT), sans pour autant reproduire les états du fluide propulseur (2) dans le RPP de Transit Hydraulique (1TRANSIT), ces états étant le plus souvent constants, de température basse et de pression basse. A noter que dans la branche isochore maximum côté droit, il est opportun de refroidir le fluide propulseur (2) chaud et gazeux se trouvant dans le RPP de Travail Thermodynamique (1THERMO), vide de liquide hydraulique (3) en conséquence du turbinage hydraulique, à partir du souhaitable réchauffage du fluide propulseur (2) dense se trouvant, froid en quasi-isochore, dans les réservoirs pressurisés secondaires (13). On utilise pour cela au cours du tronçon MN l'échangeur thermique de réchauffage-refroidissement mutuel, cité dans le paragraphe précédent, entre ces deux masses de fluide propulseur (2). Pour réussir cette opération thermique essentielle, on transvase intégralement via cet échangeur additionnel, grâce à un transvasement mécanique du liquide hydraulique (3) par une petite pompe et conduite hydraulique annexes, le fluide propulseur (2) gazeux et chaud, entre le RPP de Travail Thermodynamique (1THERMO) et le RPP de Transit Hydraulique (1TRANSIT), originellement totalement rempli de liquide hydraulique (3) en conséquence du turbinage hydraulique du cycle précèdent. Le tronçon IJ illustre ce réchauffage du fluide propulseur (2) dans les réservoirs pressurisés secondaires (13). Le tronçon JK illustre un réchauffage en phase supercritique. Le tronçon KL illustre un réchauffage isobare supercritique et une détente du fluide propulseur (2), grâce à l'évaporateur (8EVAP) situé en haute pression et grâce à une consommation de chaleur provenant par exemple de la réserve thermique chaude (15). Le tronçon LM illustre une détente diabatique, intéressante et inhabituelle, car non-classiquement isentropique, pour fournir plus de travail grâce à un apport supplémentaire de chaleur. Le tronçon MN illustre le refroidissement isochore côté droit évoqué précédemment. Le tronçon NI illustre une contraction du fluide propulseur (2) à travers une extraction de chaleur au condenseur (8COND) situé en basse pression, extraction qui va provoquer une consommation de la réserve thermique froide (16). Il est important de noter que l'on effectue nécessairement une seconde permutation volontaire des deux RPP (1THERMO) (1TRANSIT) entre le point N et le point J.

### Exemples

Un premier exemple de fonctionnement concerne, selon Fig. 2, et pour le mode des deux états Liquide-Gazeux, le stockage thermique d'énergie électrique. Le dispositif va réaliser une période principale de pompage du liquide hydraulique (3), période pilotée par plusieurs vannes non indiquées dans les figures. L'ensemble de pompage (6) entraînée grâce à l'énergie externe à stocker pousse le liquide hydraulique (3) à basse pression provenant du RPP de Transit hydraulique (1TRANSIT) vers le RPP de Travail Thermodynamique (1THERMO) via des conduits de communication liquide (7), diminuant ainsi dans le RPP de Travail Thermodynamique (1THERMO) le volume occupé par son fluide propulseur (2). Celui-ci, soumis simultanément à une intense extraction de chaleur grâce aux systèmes d'échange de chaleur (8COND) (8CIRC) destinés à la production de Chaud, va commencer à se condenser à sa pression de vapeur saturante, augmenter en masse volumique globale, puis va passer en phase liquide en occupant un volume réduit, déclenchant à cet instant la fin de la période de pompage. Dans l'alternative où, travaillant à pression haute plus élevée, le fluide propulseur (2) aurait atteint son état supercritique, celui-ci augmenterait fortement de masse volumique au cours de l'extraction de sa chaleur, occuperait un volume réduit, et comme dans l'alternative subcritique, laisserait pénétrer le fluide hydraulique (3). La suite des cycles thermodynamiques inclue des échanges thermiques isochores et deux permutations successives des 2 RPP (1THERMO1) (1TRANSIT), en permettant la production de Froid comme l'explique la figure 5 et sa description.

Un second exemple de fonctionnement concerne, selon la même Fig. 2, et pour le mode des deux états Liquide-Gazeux, la restitution électrique d'énergie thermique stockée. Lors de la période de turbinage, période pilotée par plusieurs vannes non indiquées dans la figure, le fluide propulseur (2) du RPP de Travail Thermodynamique (1THERMO), soumis simultanément à un intense apport de chaleur provenant de la réserve thermique chaude (16) grâce aux systèmes d'échange de chaleur (8EVAP) (8CIRC) va passer de l'état liquide à l'état gazeux, et va ainsi expulser à sa pression de vapeur saturante vers le RPP de Transit Hydraulique (1TRANSIT) le liquide hydraulique (3) provenant de ce RPP de Travail Thermodynamique (1THERMO) via les conduits de communication liquide (7) et via l'ensemble de turbinage (5) qui récupère ainsi l'énergie stockée. Dans l'alternative où, travaillant à pression haute plus élevée, le fluide propulseur (2) aurait atteint son état supercritique, celui-ci diminuerait fortement de masse volumique au cours de l'apport de chaleur, occuperait un volume beaucoup plus important, et comme dans l'alternative subcritique, expulserait le fluide hydraulique (3). La suite des cycles thermodynamiques inclue des échanges thermiques isochores et deux permutations successives des 2 RPP (1THERMO) (1TRANSIT) et provoque une consommation de la réserve thermique froide (16) comme l'explique la figure 6 et sa description.

Une observation qui permet de confirmer que nous sommes en présence de fluides propulseurs (2) travaillant de manière quantitativement bornée en masse, et non en présence d'une pompe à chaleur à circuit de recirculation continue, est que, en l'absence de permutation d'équipements, la production de Froid et de Chaud ne pourra pas persister au-delà du changement d'état complet des fluides propulseurs (2) (ou au-delà de la variation maximale de masse volumique du fluide propulseur, dans le cas d'un fonctionnement d'un de ceux-ci dans l'état purement supercritique).

Il est précisé que pour réaliser la restitution d'électricité stockée, il convient de munir le dispositif d'une réserve thermique froide (16) intégrée au dispositif (stockage par chaleur sensible, ou par chaleur latente ou par stockage thermochimique). On stocke donc dans les réserves thermiques froides (16) de ce stockage thermoélectrique, le Froid produit lors des périodes de détentes du fluide propulseur (2), postérieurement à la compression. Ce stockage nécessite de faire appel à une ou plusieurs masses de matière liquide ou solide, y compris l'eau salée à l'état liquide et solide, préférablement organisées selon des températures différenciées, dont éventuellement des réservoirs à thermoclines ou des zones du sol terrestre. La quantité de Froid produite est, dans le cas du CO2 utilisé comme fluide propulseur, environ 5 fois plus importante que la quantité d'énergie électrique stockée.

De même, pour disposer du doublet thermique de restitution électrique, il convient de munir le dispositif d'une réserve thermique chaude (15) intégrée au dispositif (stockage par chaleur sensible, ou par chaleur latente ou par stockage thermochimique). On stockera donc thermiquement dans les réserves thermiques chaudes (15) de ce stockage thermoélectrique, lors des périodes de compressions du fluide propulseur, le Chaud produit. Ce stockage nécessite de faire appel à une ou plusieurs masses de matière liquide ou solide, préférablement organisées selon des températures différenciées, dont éventuellement des réservoirs à thermoclines ou des zones du sol terrestre. La quantité de Chaud produite est, dans le cas du CO2 utilisé comme fluide propulseur, environ 5 fois plus importante que la quantité d'énergie électrique disponible.

Comme troisième exemple de fonctionnement, il est notable que dans les situations déjà décrites par lesquelles des sources froides externes ou des sources chaudes externes, il devient possible de demander au dispositif de réaliser une production nette d'énergie mécanique sur une séquence complète aller-retour de contraction puis d'expansion du fluide propulseur. Par exemple, dans le cas du CO2 pur employé uniformément comme fluide propulseur (2) dans les 2 RPP 1THERMO) (1TRANSIT), grâce à la seule disposition de l'environnement et d'une source froide à zéro degrés Celsius, qui serait appliquée au condenseur (8Cond) du RPP de Transit Hydraulique (1TRANSIT), la pression du liquide hydraulique (3) y sera d'environ de 40 Bar seulement, alors que la pression de restitution d'énergie au turbinage en sortie du RPP de Travail Thermodynamique (1THERMO) y sera d'environ 55 Bar, pression de vapeur saturante du CO2 réchauffé à l'évaporateur (8EVAP) par de l'air ou de l'eau ambiants, dans l'hypothèse d'une température ambiante de 20 degrés Celsius. Même dans cet exemple de faible écart de températures, une production nette d'énergie mécanique est générée par le différentiel des pressions égal à 15 bar.

### Application industrielle

Le dispositif selon l'invention est destiné au stockage et à la conversion énergétique pour stocker, produire ou déplacer de l'énergie électrique ou thermique.

Sa première application industrielle est d'apporter une solution économique à l'intermittence des énergies renouvelables intermittentes (solaire et éolien) alimentant les réseaux électriques locaux et nationaux en quantité croissante, ceci dans le cadre de la lutte contre les émissions de gaz à effet de serre produites par les nombreuses centrales électriques fonctionnant avec des énergies fossiles.

Une seconde application industrielle est d'apporter une solution économique à la nécessaire décarbonation des besoins de Froid et de Chaud des industries et des bâtiments résidentiels et tertiaires. En 2020, la consommation de Froid et de Chaud, grands consommateurs d'énergie fossile, représente 40% des émissions de gaz à effet de serre.

Une troisième application industrielle est la génération nette d'électricité, à partir de la disponibilité d'une source chaude ou d'une source froide, y compris dans les situations de faible écart de température (géothermie basse température, effluents tièdes, énergie thermique des mers) dans lesquelles les Moteurs Thermiques classiques, requérant économiquement des écarts supérieurs à 25°C, ne pourraient pas fonctionner.

### Documents brevets

WO 2010/128222 A2 « Procédé et équipements de stockage d'énergie mécanique par compression et détente quasi-isotherme d'un gaz »

### Littérature non-brevet

10.1016/j.energy.2012.09.057 A2 « Transcritical CO2 cycles with TES (thermal energy storage) for electricity storage ».

## Revendications

1. Le dispositif est constitué - par au moins deux réservoirs pressurisés principaux, d'abréviation RPP, dit RPP de Travail Thermodynamique (1THERMO) pour l'un, et dit RPP de Transit Hydraulique (LTRANSIT) pour l'autre, contenant chacun au moins un fluide propulseur (2) non-perdu et partageant au moins un liquide hydraulique (3) se déplaçant entre eux de manière opposée via au moins une communication liquide (7) équipée d'au moins une machine de conversion hydroélectrique telle qu'un ensemble de pompage (6) ou un ensemble de turbinage (5), - par un système d'échange de chaleur échangeant avec les fluides propulseurs (2) comprenant au moins un évaporateur (8EVAP) et au moins un condenseur (8COND), caractérisé - en ce que la séquence thermodynamique constituée d'une expansion puis d'une contraction de chacun des fluides propulseurs (2) s'effectue de manière lente, discontinue et quantitativement bornée en masse par la variation du volume qui les contient dans les larges RPP (1THERMO) (1TRANSIT), - en ce que les fluides propulseurs (2) soit travaillent par changements d'états alternés d'au moins deux états parmi les trois états liquide, gazeux, supercritique, soit travaillent dans l'état exclusivement supercritique par larges variations alternées de leur masse volumique supercritique, - et en ce que la pression du fluide propulseur (2) du RPP de Transit Hydraulique (1TRANSIT) est quasi-constante et proche de la valeur minimum rencontrée dans l'étendue des pressions du fluide propulseur (2) du RPP de Travail Thermodynamique (1THERMO).

2. Dispositif selon la revendication 1 **caractérisé en ce que en ce que** le dispositif incorpore au moins une réserve thermique froide (16) ou au moins une réserve thermique chaude (15) de stockage d'énergie thermique via une ou plusieurs masses de matière liquide ou solide, dont la possibilité de réservoirs à thermoclines ou de zones du sol terrestre, et **en ce que** ce sont des apports et des extractions de chaleur envers ces réserves thermiques (15) (16) qui réalisent au niveau des systèmes d'échanges de chaleur (8EVAP) (8COND) (8CIRC) la majorité des extractions ou apports de chaleur aux fluides propulseurs (2).

3. Dispositif selon la revendication 1 **caractérisé en ce que** ce sont des sources thermiques chaudes ou des sources thermiques froides extérieures au dispositif principal, par exemple sous forme d'énergie solaire thermique, ou de disposition de glace, d'eau ou d'air froids, ou de disposition de vapeur, d'eau ou d'air chauds, ou de géothermie naturelle ou artificielle, ou d'énergie fatale de procédés tiers, etc. qui réalisent au niveau des systèmes d'échange de chaleur (8EVAP) (8COND),(8CIRC) la majorité des extractions ou apports de chaleur aux fluides propulseurs (2).

4. Dispositif selon la revendications 2 ou la revendication 3 **caractérisé en ce qu'**une conjonction de moyens d'échanges thermiques différents dont des condenseurs (8CCOND), des évaporateurs (8EVAP), des échangeurs de recirculations (8CIRC) et des transvasements physiques des fluides propulseurs (2) via des échangeurs intercalés entre deux RPP permettent des apports ou extractions de chaleur à ces fluides propulseurs (2) dans tous les segments des cycles thermodynamiques, y compris dans les segments réalisant les déplacements du liquide hydraulique (3).

5. Dispositif selon l'une quelconque des revendications précédentes **caractérisé en ce que** des masses de fluides caloporteurs, ou des masses de liquide hydraulique (3), ayant échangée de la chaleur avec les fluides propulseurs (2) sont temporairement entreposées selon leurs températures plus froides ou plus chaudes dans plusieurs compartiments différenciés (9).

6. Dispositif selon la revendication 2 ou la revendication 5 **caractérisé en ce que** tout ou partie des compartiments différenciés d'entreposage temporaire de fluides selon leurs températures (9) ou tout ou partie des réserves thermiques (15) (16) utilise des Matériaux à Changement de Phase, dont éventuellement la glace d'eau salée, ou utilise un mélange aqueux sous les états Liquide-Solide.

7. Dispositif selon l'une quelconque des revendications précédentes **caractérisé en ce que** les fluides propulseurs (2) bénéficient de l'adjonction d'un ou plusieurs réservoirs pressurisés secondaires dédiés (13) et communiquant avec les RPP (1THERMO) (1TRANSIT) par une ou plusieurs conduites (14) équipées de vannes et d'éventuels mécanismes de convections forcées entre les réservoirs pressurisés secondaires (13) et ces RPP (1THERMO) (1TRANSIT).

8. Dispositif selon l'une quelconque des revendications précédentes **caractérisé en ce que** la portion supérieure de tout ou partie des réservoirs pressurisés (1THERMO) (1TRANSIT) (13) est munie d'un système d'aspersion et de chute par gravité de gouttelettes (10) de fluide propulseur (2) ou de liquide hydraulique (3) ou d'autres techniques physiques d'amélioration des transferts de chaleur tels que plateaux ou garnissages.

9. Dispositif selon l'une quelconque des revendications précédentes **caractérisé en ce que** le ou les fluides propulseurs (2) sont des corps chimiques ou des mélanges de corps chimiques sélectionnés pour posséder, aux températures maximales rencontrées dans le ou les réservoirs pressurisés (1THERMO) (1TRANSIT) (13), des pressions de vapeur saturante inférieures aux pressions maximales autorisées par ces réservoirs pressurisés (1THERMO) (1TRANSIT) (13) tel que le dioxyde de carbone, l'éthane ou tels des mélanges de dioxyde de carbone avec des hydrocarbures, avec des composés azotés ou avec des alcools.

10. Dispositif selon l'une quelconque des revendications précédentes **caractérisé en ce que** tout ou partie des fluides propulseurs (2) est réchauffé ou refroidi par un apport ou une extraction de chaleur exploitant les hautes ou basses températures de fluides provenant d'une portion différente du cycle thermodynamique ou de leur pluralité, par exemple par un échangeur de réchauffage-refroidissement mutuel entre deux masses différentes de fluide propulseur (2), ou provenant de fluides chauds ou froids stockés lors des opérations antérieures, ou exploitant une source thermique externe ou l'environnement ambiant.

11. Dispositif selon l'une quelconque des revendications précédentes **caractérisé en ce qu'**est prévu des moyens de réduire les dissolutions entre les fluides propulseurs (2) et le liquide hydraulique (3) tels que des séparations physiques mobiles (11) entre ces fluides, des augmentations du PH chimique ou l'emploi d'additifs.

12. Dispositif selon la revendication 1 ou la revendication 7 **caractérisé en ce qu'**au moins un des réservoirs pressurisés (1THERMO) (1TRANSIT) (13) est constitué par une caverne souterraine naturelle ou artificielle ou par un réservoir sous-marin.

13. Dispositif selon la revendications 1 ou la revendication 2 **caractérisé en ce qu'**au moins un RPP de Transit Hydraulique (1TRANSIT) ou au moins une réserve thermique (15) (16) est constitué par un bassin, une rivière ou une étendue naturelle d'eau.

14. Ensemble comportant une pluralité de dispositifs selon l'une quelconque des revendications précédentes dans lequel les éléments des dispositifs tels que les RPP (1THERMO) (1TRANSIT), les réservoirs pressurisés secondaires (13), les liquides hydrauliques (3), les fluides propulseurs (2), les systèmes d'échange de chaleur (8COND) (8EVAP) (8CIRC), les compartiments différenciés d'entreposage des fluides selon leurs températures (9), les communications liquides (7), les conduites (14) de fluide propulseur (2), les ensembles de pompage (6), les ensembles de turbinages (5), les réserves thermiques froides (16), les réserves thermiques chaudes (15), les bassins de réception (4) sont reliés entre eux par des conduites munies de vannes.

15. Utilisation d'un dispositif selon l'une quelconque des revendications 1 à 13 ou d'un ensemble selon la revendications 14 pour stocker ou convertir de l'énergie. 1

## Patentansprüche

1. Die Einrichtung besteht aus - mindestens zwei unter Druck gesetzten Haupttanks mit der Abkürzung RPP, von denen der eine als Thermodynamischer Arbeits-RPP (1THERMO) und der andere als Hydraulischer Transit-RPP (1TRANSIT) bezeichnet wird, die jeweils mindestens ein nicht verlorenes Treibmittel (2) enthalten und sich mindestens eine Hydraulikflüssigkeit (3) teilen, die sich zwischen ihnen in entgegengesetzter Richtung über mindestens eine flüssige Verbindung (7) bewegt, die mit mindestens einer hydroelektrischen Konversionsmaschine wie einer Pumpeinheit (6) oder einer Turbineneinheit (5) ausgestattet ist, - durch ein Wärmeaustauschsystem, das mit den Treibflüssigkeiten (2) im Austausch steht und mindestens einen Verdampfer (8EVAP) und mindestens einen Kondensator (8COND) umfasst, **dadurch gekennzeichnet**, - dass die thermodynamische Sequenz, die aus einer Expansion und dann einer Kontraktion jeder der Treibflüssigkeiten (2) besteht, langsam, diskontinuierlich und quantitativ begrenzt in der Masse durch die Veränderung des Volumens, das sie in den breiten RPP (1THERMO) (LTRANSIT) enthält, erfolgt - indem die Treibmittel (2) entweder durch abwechselnde Zustandsänderungen von mindestens zwei Zuständen aus den drei Zuständen flüssig, gasförmig und überkritisch arbeiten, oder im ausschließlich überkritischen Zustand durch breite, abwechselnde Änderungen ihrer überkritischen Volumenmasse arbeiten, - und indem der Druck des Treibfluids (2) des RPP für hydraulischen Transit (1TRANSIT) nahezu konstant und nahe dem Minimalwert ist, der im Druckbereich des Treibfluids (2) des RPP für thermodynamische Arbeit (1THERMO) angetroffen wird.

2. Einrichtung nach Anspruch 1, **dadurch gekennzeichnet, dass** die Einrichtung mindestens eine kalte thermische Reserve (16) oder mindestens eine warme thermische Reserve (15) zur Speicherung von Wärmeenergie über eine oder mehrere Massen flüssiger oder fester Materie enthält, (16), darunter die Möglichkeit von Thermoklinenreservoirs oder Erdbodenzonen, enthält, und dass es sich um Wärmezufuhr und -entzug gegenüber diesen Wärmereserven (15) (16) handelt, die auf der Ebene der Wärmeaustauschsysteme (8EVAP) (8COND) (8CIRC) den Großteil der Wärmeentnahme oder -zufuhr zu den Treibmitteln realisieren (2).

3. Einrichtung nach Anspruch 1, **dadurch gekennzeichnet, dass** es warme thermische Quellen oder kalte thermische Quellen außerhalb der Haupteinrichtung sind, z. B. in Form von thermischer Solarenergie, oder in Form von Eis, kaltem Wasser oder kalter Luft, oder in Form von Dampf, Wasser oder heißer Luft, oder in Form von natürlicher oder künstlicher Geothermie, oder in Form von überschüssigen Energie aus Drittprozessen, usw., die den Wärmeaustausch mit der Haupteinrichtung bewirken, die in den Wärmetauschersystemen (8EVAP) (8COND),(8CIRC) den Großteil der dem Treibmittel entzogenen oder zugeführten Wärme erzeugen (2).

4. Einrichtung nach Anspruch 2 oder 3, **dadurch gekennzeichnet, dass** ein Zusammenspiel von verschiedenen Wärmeaustauschmitteln, darunter Kondensatoren (8CCOND), Verdampfer (8EVAP), Rezirkulationsaustauscher (8CIRC) und physikalische Umfüllungen der Treibflüssigkeiten (2) über zwischen zwei RPPs eingefügte Austauscher die Wärmezufuhr oder -entnahme für diese Treibflüssigkeiten (2) in allen Segmenten der thermodynamischen Zyklen ermöglichen, einschließlich der Segmente, die die Bewegungen der Hydraulikflüssigkeit (3) realisieren.

5. Einrichtung nach irgendeinem der vorhergehenden Ansprüche, **dadurch gekennzeichnet, dass** Massen von Wärmeträgerflüssigkeiten oder Massen von Hydraulikflüssigkeit (3), die mit den Treibflüssigkeiten (2) Wärme ausgetauscht haben, entsprechend ihren kälteren oder wärmeren Temperaturen in mehreren differenzierten Abteilen (9) zwischengelagert werden.

6. Einrichtung nach Anspruch 2 oder Anspruch 5, **dadurch gekennzeichnet, dass** alle oder ein Teil der nach ihren Temperaturen differenzierten Abteile zur vorübergehenden Lagerung von Fluiden (9) oder alle oder ein Teil der Wärmereserven (15) (16) Phase-Change-Materialien verwenden, darunter möglicherweise Salzwassereis, oder ein wässriges Gemisch in den Zuständen Flüssig-Fest verwenden.

7. Einrichtung nach irgendeinem der vorhergehenden Ansprüche, **dadurch gekennzeichnet, dass** die Treibflüssigkeiten (2) von der Hinzufügung eines oder mehrerer dedizierter sekundärer unter Druck gesetzten Tanks (13) profitieren, die mit den RPPs (1THERMO) (1TRANSIT) über eine oder mehrere Leitungen (14) in Verbindung stehen, die mit Ventilen und eventuellen Mechanismen für erzwungene Konvektionen zwischen den sekundären unter Druck gesetzten Tanks (13) und diesen RPPs (1THERMO) (1TRANSIT) ausgestattet sind.

8. Einrichtung nach irgendeinem der vorhergehenden Ansprüche, **dadurch gekennzeichnet, dass** der obere Abschnitt aller oder eines Teils der unter Druck gesetzten Tanks (1THERMO) (LTRANSIT) (13) mit einem System zum Besprühen und Fallenlassen durch Schwerkraft von Tröpfchen (10) des Treibmittels (2) oder der Hydraulikflüssigkeit (3) oder mit anderen physikalischen Techniken zur Verbesserung der Wärmeübertragung wie Platten oder Auskleidungen versehen ist.

9. Einrichtung nach irgendeinem der vorhergehenden Ansprüche, **dadurch gekennzeichnet, dass** das oder die Treibmittel (2) chemische Körper oder Mischungen von chemischen Körpern sind, die so ausgewählt sind, dass sie bei den in dem oder den unter Druck gesetzten Tanks (1THERMO) (LTRANSIT) (13) angetroffenen Maximaltemperaturen, Sättigungsdampfdrücke aufweisen, die niedriger sind als die maximal zulässigen Drücke in diesen unter Druck gesetzten Tanks (1THERMO) (1TRANSIT) (13), wie zum Beispiel Kohlendioxid, Ethan oder Mischungen von Kohlendioxid mit Kohlenwasserstoffen, mit Stickstoffverbindungen oder mit Alkoholen.

10. Einrichtung nach irgendeinem der vorhergehenden Ansprüche, **dadurch gekennzeichnet, dass** alle oder ein Teil der Treibmittel (2) durch eine Wärmezufuhr oder -entnahme erwärmt oder gekühlt werden, die die hohen oder niedrigen Temperaturen von Fluiden nutzt, die aus einem anderen Abschnitt des thermodynamischen Zyklus oder aus ihrer Mehrzahl stammen, z. B. durch einen gegenseitigen Erwärmungs-Kühlungs-Austauscher zwischen zwei verschiedenen Massen von Treibmittel (2), oder die aus warmen oder kalten Fluiden stammen, die bei früheren Operationen gespeichert wurden, oder die eine externe thermische Quelle oder die umgebende Umwelt nutzt.

11. Einrichtung nach irgendeinem der vorhergehenden Ansprüche, **dadurch gekennzeichnet, dass** Mittel zur Verringerung der Auflösungen zwischen den Treibflüssigkeiten (2) und der Hydraulikflüssigkeit (3) vorgesehen sind, wie bewegliche physikalische Trennungen (11) zwischen diesen Flüssigkeiten, Erhöhungen des chemischen PH-Werts oder die Verwendung von Additiven.

12. Einrichtung nach Anspruch 1 oder Anspruch 7, **dadurch gekennzeichnet, dass** mindestens einer der unter Druck gesetzten Tanks (1THERMO) (1TRANSIT) (13) aus einer natürlichen oder künstlichen unterirdischen Kaverne oder einem Unterwassertank besteht.

13. Einrichtung nach Anspruch 1 oder Anspruch 2, **dadurch gekennzeichnet, dass** mindestens ein hydraulischer Transit-RPP (1TRANSIT) oder mindestens eine thermische Reserve (15) (16) aus einem Becken, einem Fluss oder einer natürlichen Wasserfläche besteht.

14. Kombination mit einer Vielzahl von Einrichtungen nach irgendeinem der vorhergehenden Ansprüche, wobei die Elemente der Einrichtungen wie die RPPs (1THERMO) (1TRANSIT), die sekundären unter Druck gesetzten Tanks (13), die Hydraulikflüssigkeiten (3), die Treibflüssigkeiten (2), die Wärmetauschsysteme (8COND) (8EVAP) (8CIRC), die nach ihren Temperaturen differenzierten Abteilungen zur Lagerung der Flüssigkeiten (9), die Flüssigkeitskommunikationen (7), die Leitungen (14) für das Treibfluid (2), die Pumpensätze (6), die Turbinensätze (5) , die kalten thermischen Reserven (16), die heißen thermischen Reserven (15), die Auffangbecken (4) untereinander durch mit Ventilen versehene Leitungen verbunden sind.

15. Verwendung einer Einrichtung nach einem der Ansprüche 1 bis 13 oder einer Kombination nach Anspruch 14 zum Speichern oder Umwandeln von Energie.

## Claims

1. The device is constituted - by at least two main pressurized tanks, abbreviated MPT, called MPT of Thermodynamic Work (1THERMO) for one, called MPT of Hydraulic Transit (1TRANSIT) for one other, each containing at least one propellant fluid (2), not deemed to be lost, and sharing at least one hydraulic fluid (3) moving between them in an opposite manner via at least one liquid communication (7) equipped with at least one hydroelectric conversion machine such as a pumping assembly (6) or a turbining assembly (5), - by a heat exchange system exchanging with the propellant fluids (2) comprising at least one evaporator (8EVAP) and at least one condenser (8COND), **characterized in** - that the thermodynamic sequence consisting of an expansion and then a contraction of each of the propellant fluids (2) is carried out slowly, discontinuously, and quantitatively bounded in mass, by the variation of the volume which contains them in the large MPT (1THERMO) (1TRANSIT), - that the propellant fluids (2) either work by alternating state changes of at least two states among the three liquid, gaseous, supercritical states, or work in the exclusively supercritical state by large alternating variations in their supercritical density, - and that the pressure of the propellant fluid (2) within the MPT of Hydraulic Transit (1TRANSIT) is quasiconstant and close to the minimum value encountered in the range of pressures covered by the propellant fluid (2) within the MPT of Thermodynamic Work (1THERMO).

2. Device according to claim 1 **characterized in that** the device incorporates at least one cold thermal reserve (16) or at least one hot thermal reserve (15) of thermal energy storage via one or more masses of liquid or solid matter, including the possibility of thermocline tanks or areas of the Earth's soil, and **in that**, at the heat exchange systems (8EVAP) (8COND) (8CIRC), the major amount of extractions of heat or inputs of heat to propellant fluids (2) are carried-out through inputs and extractions of heat from these thermal reserves (15) (16).

3. Device according to claim 1 **characterized in that**; at the heat exchange systems (8EVAP) (8COND) (8CIRC), the major amount of extractions of heat or inputs of heat to propellant fluids (2) are carried-out by hot or cold thermal sources external to the main device, for example in the form of solar thermal energy, or availability of ice, cold water or cold air, or availability of steam, hot water or hot air, or natural or artificial geothermal energy, or wasted heat energy of third party processes, etc.

4. Device according to claim 2 or claim 3 **characterized in that** a conjunction of different means of heat exchanges including condensers (8CCOND), evaporators (8EVAP), recirculation exchangers (8CIRC) and physical transfers of propellant fluids (2) via exchangers intercalated between two MPTs, allows inputs of heat or extractions of heats to these propellant fluids (2) in all segments of the thermodynamic cycles, including in those segments carrying out the movements of hydraulic fluid (3).

5. Device according to any preceding claim **characterized in that** masses of heat transfer fluids, or masses of hydraulic fluid (3), having exchanged heat with propellant fluids (2) are temporarily stored according to their cooler or hotter temperatures in several differentiated compartments (9).

6. Device according to claim 2 or claim 5 **characterized in that** all or part of the compartments differentiated for temporary storage of fluids according to their temperatures (9) or all or part of the thermal reserves (15) (16) uses Phase Change Materials, including the possibility of salt water ice, or uses an aqueous mixture slurry under the Liquid-Solid states.

7. Device according to any preceding claim **characterized in that** the propellant fluids (2) benefit from the addition of one or more dedicated secondary pressurized tank(s) (13), communicating with the MPT (1THERMO) (1TRANSIT) by one or more pipes (14) equipped with valves, and also possibly equipped with forced convection mechanisms, between the secondary pressurized tank(s) (13) and these MPT (1THERMO) (1TRANSIT).

8. Device according to any preceding claim **characterized in that** the upper portion of all or part of the pressurized tank(s) (1THERMO) (1TRANSIT) (13) is equipped with systems for spraying and dropping by gravity droplets (10) of propellant fluid (2) or hydraulic fluid (3) or with other physical techniques for improving heat transfer such as trays or packings.

9. Device according to any preceding claim **characterized in that** the propellant fluid (2) are chemical substances or mixtures of chemical molecules selected to have, at the maximum temperatures encountered in the pressurized tank (1THERMO) (1TRANSIT) (13), saturated vapor pressures lower than the maximum pressures allowed by these pressurized tanks (1THERMO) (1TRANSIT) (13), such as carbon dioxide, ethane or such as mixtures of carbon dioxide with hydrocarbons, with nitrogen compounds or with alcohols.

10. Device according to any preceding claim **characterized in that** all or part of the propellant fluids (2) is heated or cooled by a heat input or heat extraction taking benefits of the high or low temperatures of fluids from a different portion of the thermodynamic cycle or of their plurality, for example by a counter-current heating-cooling exchanger between two different masses of propellant fluid (2), or from hot or cold fluids stored in previous operations, or exploiting an external thermal source or the ambient environment.

11. Device according to any one of the preceding claims **characterized in that** is provided means for reducing dissolutions between propellant fluids (2) and hydraulic fluid (3) such as mobile physical separations (11) between these fluids, or increases in chemical pH or such as the use of additives.

12. Device according to claim 1 or claim 7 **characterized in that** at least one of the pressurized tanks (1THERMO) (1TRANSIT) (13) consists of a natural or artificial underground cavern or consists of an underwater tank.

13. Device according to claim 1 or claim 2 **characterized in that** at least one hydraulic transit MPT (1TRANSIT) or at least one thermal reserve (15) (16) consists of a basin, of a river or of a natural body of water.

14. Set comprising a plurality of devices according to any one of the preceding claims wherein the components of the devices such as MPT (1THERMO) (1TRANSIT), secondary pressurized tanks (13), hydraulic fluids (3), propellant fluids (2), heat exchange systems (8COND) (8EVAP) (8CIRC), compartments differentiated storage of fluids according to their temperatures (9), liquid communications (7), pipes (14) of propellant fluid (2), pumping assemblies (6), turbining assemblies (5), cold thermal reserves (16), hot thermal reserves (15), receiving basins (4) are connected to each others by pipes equipped with valves.

15. Use of a device according to any one of claims 1 to 13, or of a set according to claim 14, to store energy or to convert energy. ]
